# EUROPEAN PATENT APPLICATION

(11) **EP 1 332 892 A2**
(43) Date of publication of application: **06.08.2003**
(21) Application number: 03009131.8
(22) Date of filing: 22.05.2001
(51) Int. Cl.: B60B 1/04, B60B 21/06, B60B 27/02

(54) **Spoked wheel for bicycle**

(30) Priority: 24.10.2000 IT TO20001007; 09.03.2001 IT TO20010210
(62) Divisional of application: 01112450.0
(71) Applicant: Campagnolo Srl, 36100 Vicenza (VI) (IT)
(72) Inventor: Passarotto, Maurizio, 45100 Rovigo (IT)
(74) Representative: Notaro, Giancarlo

(57) **Abstract**

A spoked wheel for a bicycle comprises a rim (20), a hub (24), with a first and a second anchoring portion of the spokes (24a, 24b) and a plurality of spokes (28a, 28b) connecting the hub (24) to the rim (20), in which a first set of spokes (28a) is anchored to the first anchoring portion (24a) and a second set of spokes (28b) is anchored to the second anchoring portion (24b). The spokes (28a, 28b) are grouped in triads (30), each triad comprising two spokes (28a, 28b) from one set and a spoke (28a, 28b) from the other set.

## Description

This invention relates to a spoked wheel for bicycle. More precisely, this invention relates to a wheel for bicycle comprising a rim, a hub, with a first and a second anchoring portion of the spokes, and a plurality of spokes, which connect the rim and the hub. The spokes are divided in a first and a second set, according to whether their internal extremities are anchored to the first or to the second anchoring portion of the spokes.

The technical problem on which this invention is based is that, in certain applications, the spokes of the first and the second set are subjected to different stress. Consequently, in use, the spokes of one set are subjected to a greater risk of breakage with respect to the spokes of the other set of the same wheel.

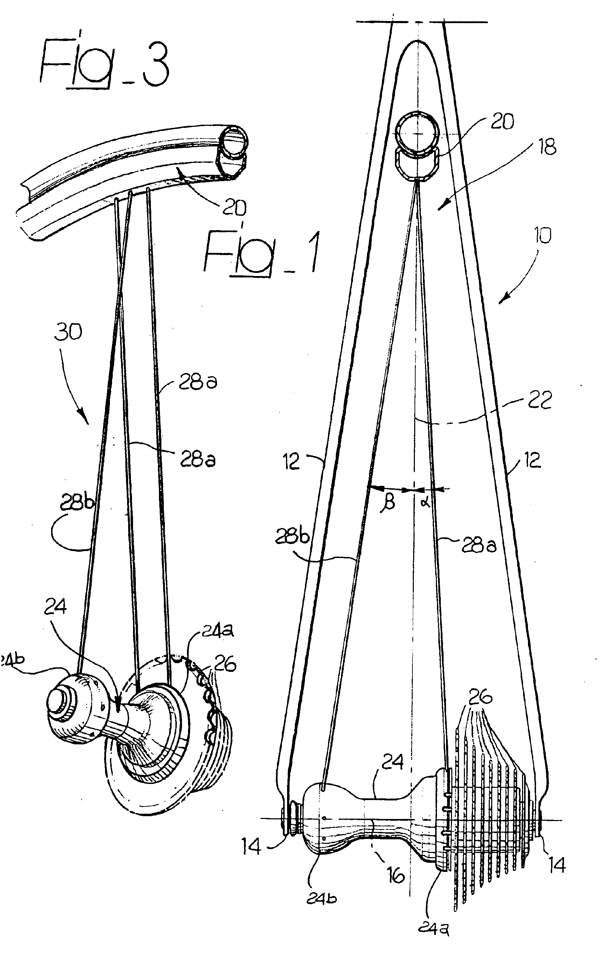

A first solution in which this problem occurs is illustrated in figure 1 of the accompanying drawings. This figure shows a rear wheel of the known type fitted on a bicycle frame 10 with two fork arms 12, which lower extremities are equipped with housings, generally indicated with numeral 14, for the fastening of a pin defining a transversal rotation axis 16. The rear wheel, generally indicated with numeral 18, comprises a rim 20, with a medium plane 22 arranged in a central position with respect to the arms 12, and the anchoring housings 14 of the frame 10. The wheel 18 comprises a hub 24, with a first and a second spoke anchoring portion, indicated with numerals 24a and 24b, respectively. The rim 20 and the hub 24 are connected by means of a first and a second set of spokes, indicated respectively with numerals 28a and 28b. The spokes 28a of the first set are anchored to the portion 24a of the hub 24 next to the set of sprockets 26, while the spokes 28b of the second set are anchored to the portion 24b of the hub 24, on the side which is most distant from the sprocket set 26.

Due to the volume of the set of sprockets 26 in the direction of the transversal axis 16, the spokes 28a and 28b have a different slant with respect to the medium plane 22 of the wheel 18. In figure 1, the slant angles of the spokes 28a and 28b with respect to the medium plane 22 are indicated with references α and β, respectively. The difference between the angles α and β will be proportional to the axis volume of the sprocket set 26. More precisely, the spokes 28a present slightly different slant angles α₁, α₂ due to the crossing of adjacent spokes. The angle α is considered as the mean angle of the angles α₁, α₂.

In traditional solutions, the fact that spokes 28a and 28b have a different slant with respect to the medium plan 22 means that these spokes are subjected to reciprocally different tensioning forces. In particular, the tensioning force of the spokes 28a must be substantially higher than the tensioning force of the spokes 28b for holding the rim 20 centred with respect to the medium plan 22 of the wheel. Indicating by Fₐ and F_{b} the mean tensioning forces of the spokes 28a and 29b, the components of these forces in the direction which is parallel to the rotation axis of the wheel must be such to ensure the correct centring of the rim 20 with respect to the medium plane 22.

Consequently, in this known solution, the spokes of the wheel located on the right-hand side of the wheel (adjacent to sprocket set) which are subjected to a higher tensioning force located on the left-hand side of the wheel (the side opposite the sprocket set).

In other types of applications, the spokes located on the left-hand side of the wheel may be subjected to a higher risk of breakage than the spokes located on the right-hand side. An example of this situation is described in document EP-A-0896887 by Mavic. This document describes a rear wheel for bicycle, in which the spokes located on the side of the sprockets are essentially arranged in the radial direction with respect to the rotation axis of the wheel and the spokes anchored to the side of the hub opposite to the sprockets are slanted and crossed. With an arrangement of this kind, as in the traditional solutions, the drive torque transmitted by the sprockets to the rim during bicycle use is nearly all transmitted to the slanted spokes, considering that the spokes arranged in the radial direction are not essentially capable of transmitting torque. Consequently, in a wheel of this type, the spokes arranged on the opposite side of the sprockets are more subjected to the risk of breakage.

The purpose of this invention is to provide a spoked wheel for bicycle which overcomes these problems.

According to this invention, this purpose is reached by means of a spoked wheel for bicycle which characteristics are described in the claims.

This invention will be better explained by the following detailed descriptions with reference to the accompanying figure as non-limiting example, whereas:
- figure 1, described above, is a partial axial cross-section of a rear wheel fitted on the frame of a bicycle,
- figure 2 is perspective view of a first form of embodiment of a wheel according to this invention,
- figure 3 is a partial perspective view of the wheel according to this invention,
- figure 4 is a perspective view of a second form of embodiment of a wheel according to this invention,
- figure 5 is a lateral view according to the arrow V of figure 4,

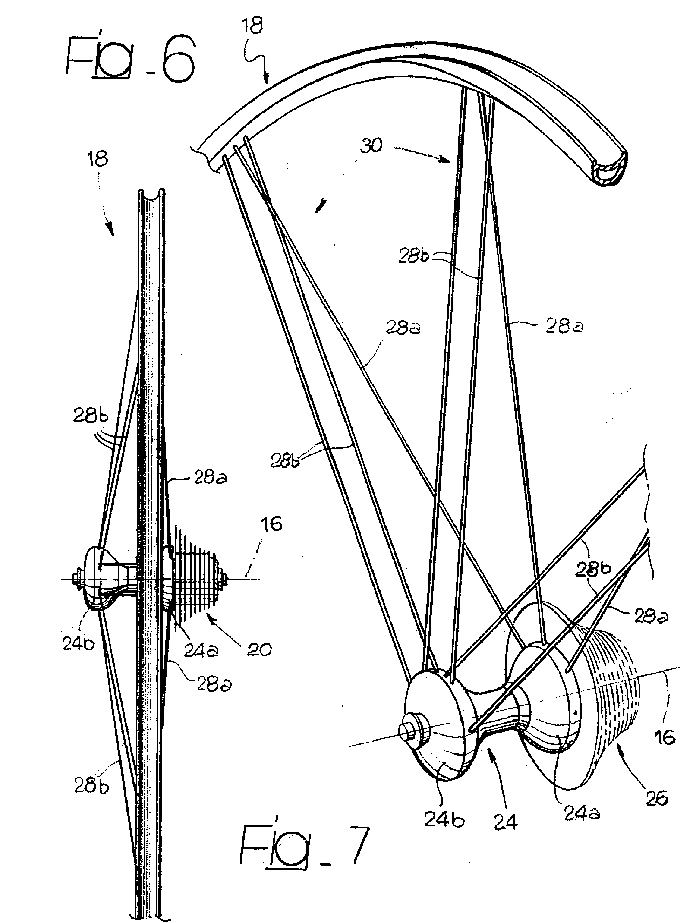

- figure 6 is a perspective view of a larger scale of the part indicated by arrow VI in figure 4, and
- figure 7 is a front view according to the arrow VII in figure 4.

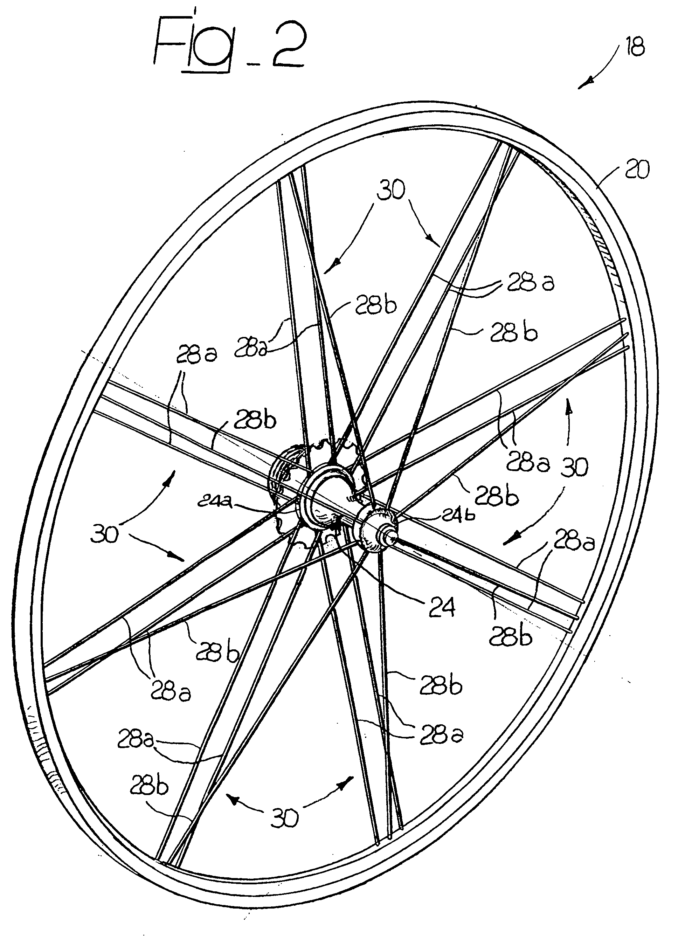

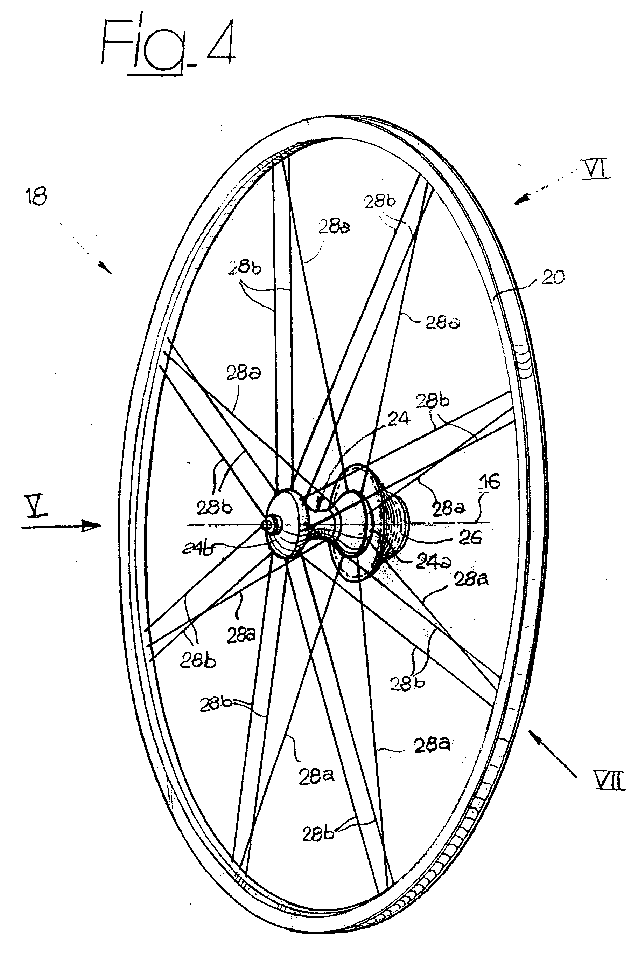

In figures 2 and 3, the parts corresponding to those described above are indicated with the same reference numerals.

In the wheel 18 according to this invention, the spokes 28a of the first set are higher in number with respect to the spokes 28b of the second set. In the form of embodiment illustrated in the figures, the spokes 28a are double with respect to the number of the spokes 28b of the second set. Preferably, the spokes 28a and 28b are grouped in a plurality of reciprocally equidistant triads 30. Each triad 30 comprises two spokes 28a of the first set and a spoke 28b of the second set, which is arranged in a central position between the respective two spokes 28a of the first set. The spokes 28a of each triad 30 are preferably respectively parallel and the spoke 28b of the triad 30 lies on a radial plane, which is equidistant with respect to the spokes 28a. The fastening method of the spokes 28a, 28b to the hub 24 and the rim 20 can be of any type. As appears in figure 2, the wheel 18 from an aesthetic point of view, assumes the configuration of a "spoked" wheel, in which each "spoke" consists of a triad of spokes 30. The number of triads of spokes 30 can vary with respect to the form of embodiment illustrated in figure 2. For example, wheels with 5, 6, 7, 8, 9 or 10 spokes can be made with a total number of spokes equal to 15, 18, 21, 24, 27 and 30, respectively.

The solution according to the first form of embodiment of this invention essentially permits halving the tensioning force of the spokes 28a with respect to the spokes 28b of the second set, whereby considerably reducing the risk of breakage of the spokes next to the sprockets which, in this first form of embodiment, is considerably more subjected to the risk of breakage.

Figures from 4 to 7 illustrate a second form of embodiment of a wheel according to this invention. Also in this second form of embodiment, the parts corresponding to those described above are shown with the same numeral references. Particularly, as in the previous form of embodiment, the spokes anchored to the side 24a of the hub 24 are indicated with numeral 28a and the spokes anchored on the side 24b of the hub 24 are indicated with numeral 24b. As will appear clear in the description that follows, in this second form of embodiment, the spokes most subjected to the risk of breakage are those arranged on the left-hand side.

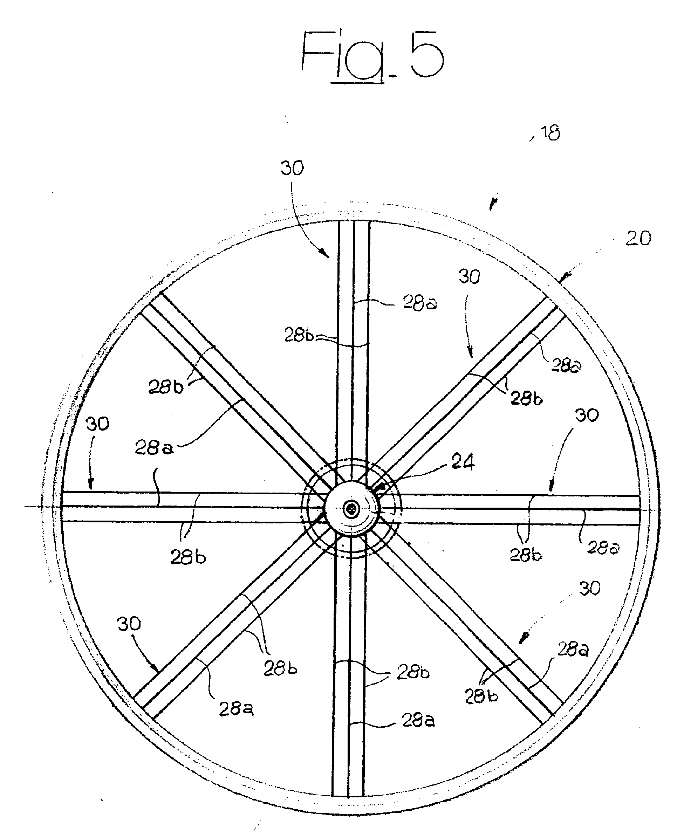

In this second form of embodiment, each of the spokes 28a in the first set lies on a plane crossing the axis 16 of the hub 24. Consequently, in a view along a parallel direction to the axis of rotation 16, as that shown in figure 5, the spokes 28a of the first set are perpendicular to the axis of rotation 16.

Each of the spokes 28b of the second set is slanted with respect to a radial direction of the rim 20 in a view along a direction parallel to the axis of rotation 20. Herein, the term "slanted" means that the spoke does not lie on a plane containing the axis of rotation 16.

Taken the plane containing the axis of rotation 16 and one of the spokes 28a as the reference, each of the spokes 28b of the same triad 30 can consequently be either parallel or slanted with respect to this plane.

According to this second form of embodiment of this invention, the spokes 28b of the second set are in a higher number, which is preferably double with respect to the number of spokes 28a in the first set. The spokes 28a, 28b of the wheel according to this invention are preferably arranged in equidistant groups 30. Each group comprises two spokes 28b of the second set and a spoke 28a of the first set arranged in central position with respect to the corresponding spokes 28b of the same group.

The groups of spokes 30 confer the appearance of a "spoked" wheel to the wheel 10. The number of such "spokes" can vary, for example, from 4 to 10, with a total number of spokes variable from 12 to 30. In each "spoke" 30, the two spokes 28b located on the same side can be reciprocally parallel as shown, for example, in the figures, or can converge towards the rim 12, or can converge towards the hub 14. This naturally also refers to the first form of embodiment.

During use, the cyclist impresses a force on the pedals which, via the gears, the chain and the sprockets, is transformed in a drive torque applied to the rotation axis 16 of the hub 24. The spokes 28a of the first set, being arranged in a radial direction with respect to axis 16, are not essentially capable of transferring torque to the rim 20. Consequently, the drive torque applied by the sprocket set 26 to the hub 24 impresses torsion on the hub body and transfers it to the rim 20 by means of the spokes 28b of the second set. With respect to a traditional wheel with the same total number of spokes, the solution according to this invention permits increasing the number of drive torque transmitting spokes, which reduces the stress on the spokes due to torque transmission and reduces the risk of breakage of the spokes.

The arrangement of the spokes 28a, 28b in triads is particularly advantageous because the axial forces are locally balanced (in parallel direction to the rotation axis of the wheel) applied by the spokes to the rim 20.

Despite that this description expressly refers to rear wheels, the solution according to this invention can be applied to a front wheel in the event in which the technical problems illustrated at the beginning of this description subsists.

## Claims

1. Spoked wheel for bicycle, comprising a rim (20), a hub (24), with a first and a second anchoring portion of the spokes (24a, 24b) and a plurality of spokes (28a, 28b) connecting the hub (24) to the rim (20), in which a first set of spokes (28a) is anchored to the first anchoring portion (24a) and a second set of spokes (28b) is anchored to the second anchoring portion (24b), **characterised in that** the spokes (28a, 28b) are grouped in triads (30), each triad comprising two spokes (28a, 28b) from the first set and one single spoke (28a, 28b) from the second set.

2. Wheel according to claim 1, **characterised in that** said triads (30) are equidistant along the circumference.

3. Wheel according to claim 2, **characterised in that** the angle between adjacent triads is greater than the angle covered by each triad.

4. Wheel according to claim 1, **characterised in that** the two spokes of each triad (30) anchored on the same side of the hub (24) are essentially parallel.

5. Wheel according to claim 1, **characterised in that** the two spokes of each triad (30) anchored on the same side of the hub (24) converge towards the rim (20).

6. Wheel according to claim 1, **characterised in that** the two spokes of each triad (30) anchored on the same side of the hub (24) diverge towards the rim (20).

7. Wheel according to any of the claims from 4 to 6, **characterised in that** one spoke (28a, 28b) of each triad (30) is contained on a radial plane arranged in central position with respect to the spokes (28a, 28b) of the same triad (30) anchored on the same side of the hub (24).

8. Wheel according to claim 1, **characterised in that** said first set of spokes (28a) is placed on the side of the wheel where the spokes are more subjected to the risk of breakage.

9. Wheel according to claim 1, **characterised in that** said first set of spokes (28a) is placed on the side of the wheel carrying a sprocket assembly.

10. Wheel according to claim 1, **characterised in that** said first set of spokes (28b) is placed on the side of the wheel opposite to the one carrying a sprocket assembly.

11. Wheel according to claim 1, **characterised in that** the spokes (28a) of the first set of spokes are arranged along directions which do not lie in radial planes extending from the wheel axis.

12. Wheel according to claim 1, **characterised in that** the spokes are grouped in seven triads.

13. Wheel according to claim 1, **characterised in that** the spokes are grouped in eight triads.

14. Wheel according to claim 1, **characterised in that** the spokes are grouped in nine triads.

15. Wheel according to claim 1, **characterised in that** the single spoke (28b) of the second set within each triad (30) is arranged between the two spokes (28a) of the first set.

16. Wheel according to claim 1, **characterised in that** within each triad (30), the spokes of the first set of spokes (28a) and the spokes of the second set of spokes (28b) have different inclinations with respect to a medium plane (22) of the wheel and that within each group of spokes (30), the axial forces applied by the spokes to the rim (20) in a direction parallel to the rotation axis of the wheel are locally balanced.

17. Wheel according to claim 1, **characterised in that** the spokes (28a, 28b) of one set are double the number of the spokes (28a, 28b) of the other set.

18. Wheel according to claim 17, **characterised in that** the ratio between the tensions of the spokes of the first set of spokes (28a) and the tensions of the spokes of the second set of spokes (28b) is substantially equal to the inverse ratio of the inclinations of the two sets of spokes (28a, 28b) with respect to the medium plane (22) of the wheel.

19. Wheel according to claim 17, **characterised in that** within each of said triads (30) of spokes, the two spokes (28a, 28b) of the first set present substantially the same tension.

20. Wheel according to claim 17, **characterised in that** within each of said triads (30) of spokes, the two spokes (28a, 28b) of the first set present a tension, along the direction parallel to the rotation axis of the wheel, which is substantially half of the tension of the single spoke (28b).

21. Wheel according to claim 1, **characterised in that** the spokes of the first set of spokes (28a) and the spokes of the second set of spokes (28b) have different inclinations with respect to a medium plane (22) of the wheel and that the axial forces applied by the spokes to the rim (20) in a direction parallel to the rotation axis of the wheel are balanced.

22. Wheel according to claim 21, **characterised in that** the ratio between the tensions of the spokes of the first set of spokes (28a) and the tensions of the spokes of the second set of spokes (28b) is substantially equal to the inverse ratio of the inclinations of the two sets of spokes (28a, 28b) with respect to the medium plane (22) of the wheel.
